# EUROPÄISCHE PATENTSCHRIFT

(11) **EP 4 149 783 B1**
(45) Veröffentlichungstag und Bekanntmachung des Hinweises auf die Patenterteilung: **09.09.2026**
(21) Anmeldenummer: 21722136.5
(22) Anmeldetag: 22.04.2021
(51) Int. Cl.: B60K 15/03

(54) **VERFAHREN UND SYSTEM ZUR ERMITTLUNG DES VERSCHLUSSSTATUS EINES KRAFTSTOFFTANKVERSCHLUSSES**
METHOD AND SYSTEM FOR DETERMINING WHETHER A FUEL FILLER CAP IS CLOSED
PROCÉDÉ ET SYSTÈME POUR DÉTERMINER SI UN BOUCHON DE REMPLISSAGE DE CARBURANT EST FERMÉ

(30) Priorität: 11.05.2020 DE 102020112715
(43) Veröffentlichungstag der Anmeldung: 22.03.2023
(73) Patentinhaber: Kautex Textron GmbH & Co. KG, 53229 Bonn (DE)
(72) Erfinder: HEDEVANG, Poul, 53225 Bonn (DE)
(74) Vertreter: Richly & Ritschel Patentanwälte PartG mbB
(86) Internationale Anmeldenummer: PCT/EP2021/060585
(87) Internationale Veröffentlichungsnummer: WO 2021/228529

(56) Entgegenhaltungen:
- EP-A1- 1 946 954
- DE-A1- 102010 048 841

## Beschreibung

### Gebiet der Erfindung

Die Erfindung liegt auf dem Gebiet der Verfahren und Systeme zur Ermittlung des Verschlussstatus eines Kraftstofftankverschlusses eines Kraftfahrzeugs.

### Hintergrund

Nach einem abgeschlossenen Betankungsvorgang muss eine Tankkappe auf dem Einfüllstützen fluiddicht angebracht werden, unter anderem um das Austreten von Kraftstoffdämpfen aus dem Kraftstofftank zu vermeiden. Daher wäre es förderlich ein Verfahren oder eine Vorrichtung bereitzustellen, die auf sichere Weise, möglichst vor dem Losfahren mit dem Fahrzeug oder kurz nach einem abgeschlossenen Betankungsvorgang, einem Nutzer des Kraftfahrzeugs anzeigt, ob der Tankkappe auf dem Einfüllstützen fluiddicht angebracht ist.

Die EP 1 946 954 A1 beschreibt ein Verfahren zum Erkennen einer offenen Tankklappe am Kraftstofftank eines Fahrzeugs mit Verbrennungsmotor mit einem Einfüllrohrkopf, der sich unter einer Tankklappe befindet. Bei dem Verfahren wird ein Test auf eine offene Tankklappe durchgeführt, wenn der Motor nach dem Abstellen wieder gestartet wird und wenn ein Türschalter anzeigt, dass die Tankklappe geöffnet wurde.

Daher liegt der Erfindung die Aufgabe zugrunde, ein Verfahren bereitzustellen, um festzustellen, ob die Tankkappe auf dem Einfüllstützen fluiddicht angebracht wurde.

### Beschreibung der Erfindung

Die Erfindung ist auf ein von einer Vorrichtung zur Datenverarbeitung durchgeführtes Verfahren zum Erfassen des Verschlussstatus eines Kraftstofftankverschlusses eines Kraftfahrzeugs gerichtet.

Das Verfahren umfasst die Schritte:
Erhalten eines Wertes für einen ersten Druck, der in dem Gasraum des Kraftstofftanks des Kraftfahrzeugs vorliegt;
Ausgabe eines Signals zum Öffnen einer Rezirkulationsleitung, die vom Kraftstofftank in den Einfüllstutzen des Kraftstofftanks führt;
Erhalten eines Wertes für einen zweiten Druck, der in dem Gasraum des Kraftstofftanks vorliegt;
Falls der zweite Druck um einen vorbestimmten Wert geringer als der erste Druck ist, Bestimmen, dass der Kraftstofftankverschluss nicht verschlossen ist und Ausgeben eines Wertes für den Verschlussstatus, der anzeigt, dass der Kraftstofftankverschluss am Einfüllstutzen nicht geschlossen ist.

Das Verfahren kann in der Reihenfolge der oben beschriebenen Schritte durchgeführt werden.

Das Verfahren basiert auf der Erkenntnis, dass bei einem befüllten Kraftstofftank der Kraftstoff im Einfüllrohr aufsteigt. Damit kann der Flüssigkeitsspiegel in Einfüllrohr höher sein als im Kraftstofftank. Der Flüssigkeitsspiegel im Einfüllrohr befindet sich also im oberen Teil des Einfüllrohrs oder im darüber liegenden Einfüllstutzen. Über diesem Flüssigkeitsspiegel befindet sich zu diesem Zeitpunkt eine Gasatmosphäre.

Zu diesem Zeitpunkt sind alle (Entlüftungs-)Leitungen zum Transport von Gasen, die mit dem Kraftstofftank verbunden sind, fluiddicht von der Atmosphäre getrennt. Zu diesem Zeitpunkt besteht ein bestimmter Druck in Gasraum des Kraftstofftanks, der über dem Druck der Atmosphäre liegt. Für gewöhnlich sollte der Kraftstofftankverschluss nun durch Anbringen der Tankkappe auf dem Einfüllrohr oder einer anderen geeigneten Verschlussvorrichtung verschlossen werden. Ist dies aber nicht der Fall führt das gemäß dem Verfahren erfolgende Öffnen der Rezirkulationsleitung zu einem Verbinden der folgenden drei Atmosphären: der Gasatmosphäre über dem Flüssigkeitsspiegel im Einfüllrohr, dem Gasraum des Kraftstofftanks und der Atmosphäre. Andere Entlüftungs-)Leitungen zum Transport von Gasen, die mit dem Kraftstofftank verbunden sind, außer der Rezirkulationsleitung sind zu diesem Zeitpunkt nicht geöffnet. Durch das Verbinden der drei oben genannten Atmosphären sinkt der Druck im Gasraum des Kraftstofftanks substantiell ab bis maximal auf einen Druck, der dem Druck in der Atmosphäre entspricht. Dadurch, dass bestimmt werden kann, dass der zweite Druck um einen vorbestimmten Wert geringer als der erste Druck ist, kann bestimmt werden, dass der Kraftstofftankverschluss nicht verschlossen ist. Falls im umgekehrten Fall der Kraftstofftankverschluss fluiddicht verschlossen wurde, würde bestimmt werden, dass nur ein geringer Druckabfall erfolgt ist, d.h. dass der zweite Druck nicht um einen vorbestimmten Wert geringer als der erste Druck ist.

Das Verfahren bietet den Vorteil, dass der Verschlussstatus eines Kraftstofftankverschlusses über den Druck im Gasraum bestimmt werden kann. Es ist daher nicht nötig auf irgendwelche Sensoren oder Kontaktsensoren oder sonstige mechanische Vorrichtungen am Tankverschluss selbst zurückzugreifen. Solche Vorrichtungen am Tankdeckel selbst können durch die fortwährende mechanische Belastung des Öffnens und Schließen des Tankverschlusses verschleißen oder durch eingebrachte Verschmutzungen zwischen Tankkappe und Einfüllstutzen zu fehlerhaften Bestimmungen/Meldungen führen.

Unter einer Rezirkulationsleitung wird jede Leitung bzw. Entlüftungsleitung, z.B. Befüllentlüftungsleitung, verstanden, die vom Kraftstofftank in den Einfüllstutzen des Kraftstofftanks führt.

Unter dem Gasraum des Kraftstofftanks wird der Bereich eines Kraftstofftanks verstanden, der in Einbaulage auch nach dem Betanken des Kraftstofftanks zu einem vorbestimmten Maximalwert nicht mit Kraftstoff angefüllt ist, so dass sich in diesem Gasraum nur Fluide in Gasform befinden (bei den üblichen Betriebstemperaturen für einen Kraftstofftank bzw. für ein Kraftfahrzeug).

Der Zeitraum zwischen Bestimmen des ersten und zweiten Druckes kann weniger als 10 Sekunden, 8 Sekunden, 6 Sekunden, 4 Sekunden, 3 Sekunden, 2 Sekunden oder 1 Sekunde betragen.

Der zeitliche Abstand zwischen dem Bestimmen des ersten und zweiten Druckes kann vorgegeben sein, z.B. kann er 10 Sekunden, 8 Sekunden, 6 Sekunden, 4 Sekunden, 3 Sekunden, 2 Sekunden oder 1 Sekunde betragen. Alternativ oder zusätzlich kann der für das Bestimmen des zweiten Drucks relevante Wert durch die Vorrichtung zur Datenverarbeitung bestimmt werden, als der Wert, bei dem nach 1, 2, 3, 4, oder 5 Sekunden keine Veränderung des Wertes des zweiten Druckes mehr auftritt.

Der Druck kann über einen Drucksensor ermittelt werden. Der Drucksensor kann über eine Signalleitung den Wert des ermittelten (gemessenen) Drucks an eine Verarbeitungseinheit, z.B. die Vorrichtung zur Datenverarbeitung übermittelt werden. Die Daten der Werte können analog oder digital über die Signalleitung übermittelt werden. Grundsätzlich können alle Signale zwischen den Komponenten des hier beschriebenen Systems digital oder analog übertragen werden. Dazu sind alle üblichen Signalleitungen geeignet, wie Kabel, Kabelsysteme, Bussysteme, Signalleitungen mit elektrischer oder optischer Übertragungsweise oder kabellose Signalwege (wie z.B. Bluetooth, WiFi, RFID, Mobilfunk oder Infrarotübertragung). Der Drucksensor muss einen (fluiden) Zugang zum Gasraum besitzen, jedoch ist die Lage des Drucksensors oder des Zugangs des Drucksensors im Kraftstofftanksystem zum Gasraum nicht beschränkt, solange ein Zugang zum Gasraum besteht. Beispielsweise kann der Zugang des Drucksensors in der Rezirkulationsleitung an einer Position sein, die auch nach Verschließen der Rezirkulationsleitung den Zugang zum Gasraum ermöglicht. Auch kann die Position des Zugangs im Deckel oder den Seitenwänden des Tanks sein.

Bei digital übermittelten Werten ist der Sensor mit einem Digital-Analog-Konverter versehen oder mit einem Digital-Analog-Konverter gekoppelt zur Erzeugung des digitalen Signals.

Bei dem zu messenden Druck kann es sich um einen Absolutdruck handeln, also ein Druck der nicht in Referenz zu dem Druck in einem anderen Fluid angegeben wird. Der Drucksensor kann also den Absolutdruck im Gasraum messen. Alternativ kann es sich bei dem Druck um einen Differenzdruck handeln. Der Differenzdruck kann mit einem Differenzdrucksensor gemessen werden. Der Differenzdrucksensor könnte einen Zugang zum Gasraum und einen Zugang zur Atmosphäre haben, um auf diese Weise den Druckunterschied zur Atmosphäre zu bestimmen. Alternativ kann der Differenzdruck auch durch zwei Drucksensoren gemessen werden, die jeweils den Absolutdruck im Gasraum oder den Absolutdruck in der Atmosphäre bestimmen, wobei die Differenz der Drücke in einer Vorrichtung zur Datenverarbeitung oder einer sonstigen Vorrichtung zur Ausgabe eines Differenzdrucks basierend auf den Messwerten der zwei Drucksensoren bestimmt wird.

Das Signal zum Öffnen einer Rezirkulationsleitung kann durch eine Signalleitung übertragen werden. Das Öffnen und Schließen der Rezirkulationsleitung kann durch jegliche bekannte Vorrichtung zum Schließen und Öffnen einer Leitung zum Transport von gasförmigen Fluiden, also einem Absperrorgan, erreicht werden. Dazu zählen Ventile, Absperrschieber oder Absperrklappen. Die Absperrorgane sind durch die Vorrichtung zur Datenverarbeitung über Signalleitungen ansteuerbar. Die Absperrorgane sind (elektro-)motorisch oder (elektro-)magnetisch betätigte Absperrorgane oder Absperrorgane mit FormGedächtnis-Legierung Aktuator (Shape Memory Alloy Aktuator). Falls optische Signalleitungen eingesetzt werden, sind die Absperrorgane mit elektrischer Versorgung ausgestattet. Das Absperrorgan in der Rezirkulationsleitung kann als Rezirkulationsabsperrorgan oder -ventil bezeichnet werden.

Das Verfahren kann vor den vorgenannten Schritten den folgenden Schritt umfassen: Übermitteln eines Signals zum Unterbrechen der Verbindung des Gasraums zur Atmosphäre. Von dem Gasraum des Kraftstofftanks aus kann es mehrere Leitungen geben, die direkt oder indirekt mit der Atmosphäre in Kontakt stehen, z.B. die Rezirkulationsleitung oder Leitungen, die Teil von Filtersystemen oder/und (weiteren) Entlüftungssystemen sind, wie Aktivkohlefiltersystemen, wie sie aus einem ORVR-System (Onboard Refueling Vapor Recovery System) oder einem EVR-System (External Varpor Recovery System) bekannt sind. Durch das Unterbrechen der Verbindung des Gasraums zur Atmosphäre kann der erste Druck im Gasraum größer sein als in der Atmosphäre. Dies kann (bei fortgesetzter Befüllung) dazu führen, dass der Flüssigkeitsspiegel im Einfüllrohr über den Flüssigkeitsspiegel im Kraftstofftank ansteigt. Ferner kann das Ansteigen des Flüssigkeitsspiegels im Einfüllrohr dazu führen, dass das Befüllen infolge Schließen des Zapfventils der Zapfsäule unterbrochen wird. Ein weiteres Befüllen kann aber dennoch durch manuelles Initiieren des Öffnens des Zapfventils möglich sein.

Alternativ ist möglich, dass Unterbrechen der Verbindung des Gasraums zur Atmosphäre durch die mechanische/konstruktionsbedingte Gestaltung der (Betankungsentlüftungs-)Ventile in den (Betankungsentlüftungs-)Leitungen erfolgt. Zum Beispiel kann bei einem vorbestimmten Flüssigkeitsspiegel im Kraftstofftank es zum Schließen des oder der (Betankungsentlüftungs-)Ventile kommen, ohne dass es dazu eines Signals durch eine Vorrichtung zur Datenverarbeitung bedarf.

Das Übermitteln eines Signals zum Unterbrechen der Verbindung des Gasraums zur Atmosphäre kann umfassen: Übermitteln eines Signals zum Unterbrechen der Rezirkulationsleitung.

Das Verfahren kann durchgeführt werden nach dem Bestimmen,
i) dass der Kraftstofftank befüllt wurde,
ii) dass eine Tankklappe an dem Kraftstofftankverschluss geschlossen wurde,
iii) dass ein Motor zur Fortbewegung des Fahrzeugs eingeschaltet wurde, oder
iv) dass der Befüllvorgang von der Vorrichtung zur Datenverarbeitung als abgeschlossen definiert wurde.
oder zwei, drei oder vier der Bedingungen i) bis iv) vorliegen.

Das Verfahren durchzuführen, nachdem bestimmt wurde, dass der der Kraftstofftank befüllt wurde, hat den Vorteil, dass das Verfahren genau dann angewendet wurde, zu dem es eine erhöhte Wahrscheinlichkeit gibt, dass der Verschluss nicht richtig verschlossen wurde. Um zu bestimmen, ob der Kraftstofftank befüllt wurde, kann bestimmt werden, dass der Flüssigkeitspegel im Kraftstofftank im Vergleich zu einem früheren Zeitpunkt angestiegen ist und innerhalb eines definierten Zeitfensters nicht mehr angestiegen ist. Zur Messung des Flüssigkeitspegels im Kraftstofftank können als Sensoren Schwimmer-Vorrichtungen, Kapazitätsmessvorrichtungen oder Näherungssensoren (z.B. Ultraschallsensoren) eingesetzt werden. Über Signalleitungen können die Sensoren zur Messung des Flüssigkeitspegels Daten über den Flüssigkeitspegel an eine Vorrichtung zur Datenverarbeitung weitergeben, in der auch Daten über frühere Flüssigkeitspegel abgespeichert sein können. Durch den Vergleich der Daten über den aktuellen Flüssigkeitspegel mit den Daten über frühere Flüssigkeitspegel kann bestimmt werden, ob der Kraftstofftank befüllt wurde.

Das Verfahren kann ferner umfassen: Bestimmen, dass der Kraftstofftank befüllt wurde, wobei bestimmt wird, dass der Kraftstofftank zu seiner vollen Kapazität gefüllt wurde. Die volle Kapazität kann daran bestimmt werden, dass der Tank bis zu einem vordefinierten Flüssigkeitspegel aufgefüllt wurde.

Das Verfahren kann ferner umfassen: Bestimmen, dass der Kraftstofftank befüllt wurde, wobei der Flüssigkeitsspiegel des Kraftstoffs im Tankeinfüllrohr oberhalb des Flüssigkeitsspiegels in dem Kraftstofftank liegt. Dadurch wird angezeigt, dass der Druck im Gasraum des Kraftstofftanks über dem Atmosphärendruck liegt. Das Tankfüllrohr erstreckt sich vom Kraftstofftank zum Einfüllstützen.

Das Verfahren durchzuführen, nachdem bestimmt wurde, dass die Tankklappe an dem Kraftstofftankverschluss geschlossen wurde, hat den Vorteil, dass das Verfahren genau zu dem Zeitpunkt begonnen wird, zu dem es eine erhöhte Wahrscheinlichkeit gibt, dass der Verschluss nicht richtig verschlossen wurde.

Die Tankklappe dient zum Abdecken der Tankkappe und hat z.B. die Funktion die Tankkappe optisch zu verdecken und im geschlossenen Zustand ein einheitliches Bild mit der Karosserieoberfläche herzustellen. Ferner kann die Tankklapp die Funktion haben, den Zugang zum Kraftstofftankverschluss zu verriegeln.

Um zu bestimmen, ob die Tankklappe an dem Kraftstofftankverschluss geschlossen wurde, kann bestimmt werden, dass eine Kontaktsensorvorrichtung (magnetisch, elektrisch, optisch oder akustisch) an der Tankklappe anzeigt, ob die Tankklappe geöffnet und wieder geschlossen wurde. Über Signalleitungen kann die Kontaktsensorvorrichtung Daten über das Öffnen und Schließen der Tankklappe an eine Vorrichtung zur Datenverarbeitung weitergeben, in der auch Daten über früheres Öffnen und Schließen der Tankklappe abgespeichert sein können.

Das Verfahren durchzuführen, nachdem bestimmt wurde, dass ein Motor zur Fortbewegung des Fahrzeugs eingeschaltet wurde, hat den Vorteil, dass das Verfahren genau dann angewendet würde, wenn die Gefahr besteht, dass das Fahrzeug z.B. nach dem Betanken in Bewegung gesetzt wird, ohne dass der Kraftstoffverschluss verschlossen wurde. Ferner hat der Nutzer zu diesem Zeitpunkt noch die Möglichkeit, die Kraftstoffverschluss korrekt zu verschließen, d.h. bevor er das Fahrzeug in Bewegung setzt. Der Motor zur Fortbewegung des Fahrzeugs kann ein Verbrennungsmotor oder ein elektrischer Motor z.B. der elektrische Motor eines Hybridfahrzeugs sein. Es kommt nicht darauf an, ob der eingefüllte Kraftstoff auch zum Betreiben des Motors zur Fortbewegung des Fahrzeugs verwendet wird, sondern nur darauf, dass bestimmt wurde, dass das Fahrzeug vermutlich bald in Bewegung gesetzt wird. Wenn mehrere Bedingungen i) bis iv) geprüft werden, sollte Schritt iii) als letztes geprüft werden. Spätestens zu diesem Zeitpunkt sollte das Verfahren initiiert werden.

Das Verfahren durchzuführen, nachdem bestimmt wurde, dass der Befüllvorgang von der Vorrichtung zur Datenverarbeitung als abgeschlossen definiert wurde, hat den Vorteil, dass das Verfahren unmittelbar nach dem Zeitpunkt durchgeführt wird, zu dem das Betanken beendet wurde. Die Vorrichtung zur Datenverarbeitung kann den Befüllvorgang als abschlossen definieren, wenn infolge Datenübermittlung durch einen fahrzeugseitigen Sensor indiziert ist, dass der Befüllvorgang abgeschlossen ist. Alternativ kann die Vorrichtung zur Datenverarbeitung den Befüllvorgang als abschlossen definieren, wenn infolge direkter oder indirekter Datenübermittlung durch eine Befüllvorrichtung (wie einer Tanksäule) an die Vorrichtung zur Datenverarbeitung indiziert ist, dass der Befüllvorgang abgeschlossen ist.

Das Verfahren kann durchgeführt werden, nachdem Bedingungen i),ii),iii), iv) vorliegen, optional in der zeitlichen Reihenfolge i),ii) (und/iv)),iii).

Das Verfahren kann durchgeführt werden, nachdem Bedingungen i),ii) vorliegen, optional in der zeitlichen Reihenfolge der Bedingungen i),ii).

Das Verfahren kann durchgeführt werden, nachdem Bedingungen i) iii) vorliegen, optional in der zeitlichen Reihenfolge i),iii).

Das Verfahren kann durchgeführt werden, nachdem Bedingungen i) iv) vorliegen, optional in der zeitlichen Reihenfolge i),iv).

Der Wert des ersten Drucks kann mindestens 100 Pascal (1 mbar), mindestens 200 Pascal (2 mbar), mindestens 300 Pascal (5 mbar), mindestens 500 Pascal (5 mbar), mindestens 1000 Pascal (10 mbar) oder mindestens 2000 Pascal (20 mbar) größer als der Druck in der Atmosphäre sein. Als Druck in der Atmosphäre ist der Druck zu verstehen, der in der das Fahrzeug umgebende Atmosphäre herrscht (z.B. 1013,25 hPa als Normdruck, schwankend abhängig von Wetter und Höhe). Bei diesem Wert des ersten Drucks lässt sich besonders gut ein Unterschied zum Wert des zweiten Drucks bestimmen.

Der zweite Druck kann mindestens 10%, 15%, 20%, 30%, 40%, 50%, 60%, 70%, 80%, 90% oder 100% geringer als der erste Druck sein (d.h. der vorbestimmte Wert ist ein Wert der 10%, 15%, 20%, 30%, 40%, 50%, 60%, 70%, 80%, 90%, oder 100% des Wertes des ersten Drucks ist). Bei diesen Druckunterschieden lässt sich besonders gut bestimmen, ob der Kraftstofftankverschluss den Einfüllstutzten nicht verschließt.

Der Wert des ersten Drucks und der Wert des zweiten Drucks kann jeweils den Wert eines Differenzdrucks gegenüber der Atmosphäre darstellen. Der Wert des Atmosphärendrucks kann durch Messen des Atmosphärendrucks, Eichung des Drucksensors oder Vorgabe in der Vorrichtung zur Datenverarbeitung erhalten werden.

Der Wert des ersten Druckes und des zweiten Druckes kann einen Absolutwert in Pascal angeben und der der zweite Druck kann mindestens 85 Pascal, 100 Pascal, 150 Pascal, 200 Pascal, 250 Pascal, 300 Pascal, 350 Pascal, 400 Pascal, 450 Pascal, 500 Pascal, 550 Pascal, 600 Pascal, 650 Pascal, 750 Pascal, 800 Pascal, 850 Pascal, 900 Pascal, oder 1000 Pascal geringer als der erste Druck sein. Dies bedeutet, dass der vorbestimmte Wert, der bei Vergleich des ersten Drucks und des zweiten Druckes anzeigt, dass der Kraftstofftankverschluss nicht verschlossen ist, kann 85 Pascal, 100 Pascal, 150 Pascal, 200 Pascal, 250 Pascal, 300 Pascal, 350 Pascal, 400 Pascal, 450 Pascal, 500 Pascal, 550 Pascal, 600 Pascal, 650 Pascal, 750 Pascal, 800 Pascal, 850 Pascal, 900 Pascal, oder 1000 Pascal sein. Auch bei diesen Druckunterschieden lässt sich besonders gut bestimmen, ob der Kraftstofftankverschluss den Einfüllstutzen nicht verschließt.

Durch die Vorrichtung zur Datenverarbeitung kann bei kontinuierlicher Messung des Drucks im Kraftstofftank auch ermittelt werden, mit welcher Rate eine Druckänderung nach Öffnung der Rezirkulationsleitung auftritt, also die Geschwindigkeit der Druckveränderung. Kontinuierliche Messung bedeutet, dass die Vorrichtung zur Datenverarbeitung mindestens alle 1000 ms, 500 ms, 300 ms, 100 ms, 50 ms, 30 ms oder 10 ms Daten von dem oder den Drucksensoren über den im Gasraum des Kraftstofftanks herrschenden Druck erhält. Aus dieser Geschwindigkeit kann der Verschlussstatus bei Überschreiten eines vorgegeben Schwellenwertes bestimmt werden.

Das Ausgeben eines Wertes für den Verschlussstatus, der anzeigt, dass der Kraftstofftankverschluss den Einfüllstutzen nicht verschließt, kann die Ausgabe eines Signals (Ausgabesignals) bewirken, das vom Benutzer wahrgenommen werden kann. Die Vorrichtung zur Datenverarbeitung kann den ausgegebenen Wert über eine Signalleitung an einen Signalgeber im Fahrgastinnenraum leiten. Der Signalgeber kann ein visuelles, akustisches oder haptisches Ausgabesignal im Fahrgastinnenraum ausgeben, das als Warnsignal fungieren kann. Das visuelle Ausgabesignal kann eine aktivierte Warnleuchte sein. Die Warnleuchte kann Teil eines Armaturenbretts sein, das Anzeige- oder Instrumententafel umfasst, und das digitale oder analoge Warnleuchten enthält oder Teil einer Anzeige eines Head-up-Displays sein.

Ferner ist die Erfindung auf ein Verfahren zum Erfassen des Verschlussstatus eines Kraftstofftankverschlusses eines

Kraftfahrzeugs gerichtet umfassend das oben genannte Verfahren und umfassend die Schritte:
- Bestimmen des ersten Drucks, der in dem Gasraum des Kraftstofftanks des Kraftfahrzeugs vorliegt;
- Öffnen der Rezirkulationsleitung, die vom Kraftstofftank in den Einfüllstutzen des Kraftstofftanks führt;
- Bestimmen des zweiten Drucks, der in dem Gasraum des Kraftstofftanks vorliegt;
- Falls der der zweite Druck um einen vorbestimmten Wert geringer als der erste Druck ist, Bestimmen, dass der Kraftstofftankverschluss nicht verschlossen ist.

Weiterhin betrifft die Erfindung ein Computerprogramm, umfassend Befehle, die bei der Ausführung des Programms durch einen Computer diesen veranlassen, das oben genannte Verfahren auszuführen.

Weiterhin betrifft die Erfindung ein computerlesbares Speichermedium, umfassend Befehle, die bei der Ausführung durch einen Computer diesen veranlassen, das oben genannte Verfahren auszuführen.

Weiterhin betrifft die Erfindung eine Vorrichtung zur Datenverarbeitung, umfassend das oben beschriebene Speichermedium.

Weiterhin betrifft die Erfindung ein System zum Erfassen des Verschlussstatus eines Kraftstofftankverschlusses eines Kraftfahrzeugs umfassend
einen Kraftstofftank mit Tankeinfüllrohr und Einfüllstützen;
ein Rezirkulationsleitung, die vom Kraftstofftank in den Einfüllstutzen des Kraftstofftanks führt;
einen Sensor zur Erfassung des Druckes in dem Gasraums des Kraftstofftanks;
einer Verschlussvorrichtung am Einfüllstutzen zur Trennung des Kraftstofftanks von der Atmosphäre; und
eine Vorrichtung zur Datenverarbeitung wie oben definiert.

Das System kann eine Vorrichtung zum Bestimmen des Füllstandes im Kraftstofftank umfassen. Das System kann eine Vorrichtung zum Beenden des Befüllungsvorgangs für einen Kraftstofftank umfassen. Insbesondere kann das System eine Betankungsentlüftungsventil-Vorrichtung für einen Kraftstofftank umfassen. Die Betankungsentlüftungsventil-Vorrichtung kann ein mechanisches oder elektromechanisches Betankungsentlüftungsventil umfassen, welches in einer Leitung platziert ist, die Gase aus dem Gasraum des Kraftstofftanks ableitet und während des Befüllungsvorgangs offen ist.

Die Vorrichtung zum Bestimmen des Füllstandes kann ein Signal an die Vorrichtung zur Datenverarbeitung geben, das anzeigt, dass ein vorbestimmter oder maximaler Füllstand im Tank erreicht wurde. Daraufhin kann die Vorrichtung zur Datenverarbeitung ein Signal an die Betankungsentlüftungsventil-Vorrichtung geben, die Betankungsentlüftungsventil-Vorrichtung zu schließen.

Alternativ kann durch die Bauart des Betankungsentlüftungsventils (z.B. aufschwimmbarer Ventilkörper dessen Aufschwimmen zum Verschluss des Ventilsitzes führt) bewirkt werden, dass die Betankungsentlüftungsventil-Vorrichtung schließt. Die Betankungsentlüftungsventil-Vorrichtung kann in der Rezirkulationsleitung vorgesehen und dem Rezirkulationsleitungsventil entsprechen oder und in einer anderen Leitung zur Entlüftung des Kraftstofftanks untergebracht sein.

Der Kraftstofftank kann aus jedem geeigneten Material, wie Kunststoff (z.B. HDPE) oder Metall gefertigt sein. Der Kraftstofftank aus Kunststoff kann durch Blasformen oder Spritzgießen gefertigt werden.

Der Kraftstofftank kann alle üblichen Vorrichtungen oder Einrichtungen wie Kraftstoffpumpe(n), Überrollventile, Kraftstoffleitungen bzw. deren Anschlüsse, Sensoren, die keine Drucksensoren sind (z.B. Temperatursensoren, Ultraschallsensoren), Schwimmer, Schwallbleche, innere und äußere Stützvorrichtung zur Stabilisierung des Kraftstofftanks umfassen.

Insbesondere kann der Kraftstofftank als ein System zur Reduktion der Kohlenwasserstoffemissionen beim Betanken ausgebildet sein, wie einem ORVR-System (Onboard Refueling Vapor Recovery System) oder einem EVR-System (External Vapor Recovery System). Daher kann der Kraftstofftank ein Betankungsentlüftungsventil aufweisen, das über eine Leitung eine fluide Verbindung vom Gasraum des Kraftstofftanks zu einem Aktivkohlefilter herstellen kann. Der Aktivkohlefilter kann über eine weitere Leitung mit einem Entlüftungsventil verbunden, das seinerseits mit einer abführenden Leitung verbunden ist. Der Aktivkohlefilter kann über eine weitere Leitung mit einer Leckanzeigeeinrichtung (leak detection unit) verbunden sein, wie z.B. bei einem ORVR-System.

Die Wand des Kraftstofftanks kann ein- oder mehrlagig sein und eine oder mehrere Barriereschichten aus für die im Kraftstoff enthaltenen Kohlenwasserstoffe undurchlässigem Material enthalten, z.B. EVOH.

Die Vorrichtung zur Datenverarbeitung kann jegliche übliche Vorrichtung zur Datenverarbeitung sein, beispielsweise ein Prozessor mit Arbeitsspeicher und Speichermedium, die über einen Datenbus verbunden sind.

### Figuren

Figur 1 illustriert schematisch den Aufbau eines Kraftstofftanksystems. Der Füllstand im Kraftstofftank und dem Tankeinfüllrohr in Figur 1 illustriert die Situation zu einem Zeitpunkt, zu dem das (Rezirkulationsleitungs-)Ventil geschlossen ist.
Figur 2 illustriert schematisch den Zustand des Kraftstofftanksystems aus Figur 1 zu einem Zeitpunkt, an dem das Ventil geöffnet ist und die Tankkappe auf dem Einfüllstützen nicht fluiddicht angebracht wurde.
Figur 3 illustriert schematisch den Zustand des Kraftstofftanksystems aus Figur 1 zu einem Zeitpunkt, an dem das Ventil geöffnet ist und die Tankkappe auf dem Einfüllstützen angebracht wurde.
Figur 4 illustriert das Kraftstofftanksystem als ORVR-System (Onboard Refueling Vapor Recovery System).

### Beispiel

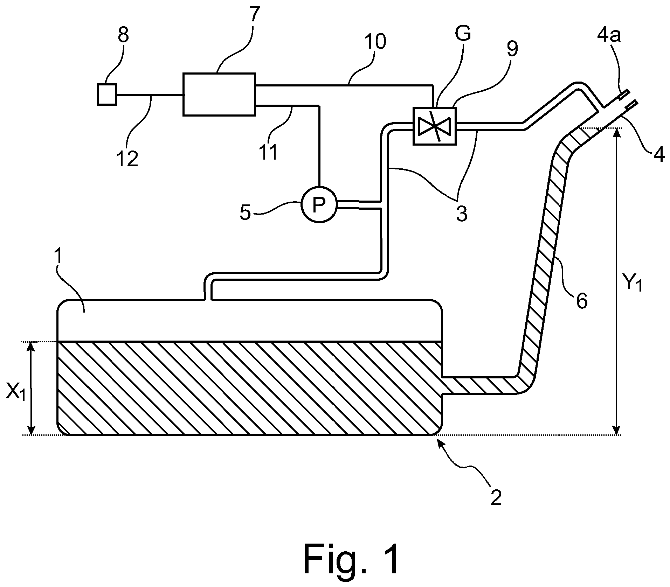

Figur 1 zeigt ein Kraftstofftanksystem mit einem Kraftstofftank 2, einem daran vorgesehenen Tankeinfüllrohr 6, an dem ein Einfüllstutzen 4 angebracht ist. Ferner ist ein Drucksensor 5 an einer Rezirkulationsleitung 3 vorgesehen, die eine fluide Verbindung zwischen Gasraum 1 und einem Volumen im Einfüllstutzen 4 herstellt. Der Drucksensor kann aber an jeder beliebigen Stelle des Kraftstoffsystems angebracht sein, sofern er einen Zugang zum Gasraum 1 besitzt. In der Rezirkulationsleitung ist ein steuerbares Rezirkulationsleitungsventil 9 vorgesehen, durch das die Verbindung zwischen Gasraum 1 und dem Volumen im Einfüllstutzen 4 unterbrochen werden kann.

Ferner enthält das Kraftstofftanksystem eine Vorrichtung 7 zur Datenverarbeitung. Diese Vorrichtung 7 kann über Signalleitungen (auch Datenleitungen oder Datenaustauschleitungen genannt) mit Sensoren, steuerbaren Ventilen, Ausgabesystemen wie Signalgebern, oder sonstigen Aktuatoren verbunden sein. Das Kraftstofftanksystem kann eine Datenleitung zwischen Rezirkulationsleitungsventil 9 und Vorrichtung 7, eine Datenleitung 11 zwischen Drucksensor und Vorrichtung 7, und eine Datenleitung 12 zwischen Vorrichtung 7 und Signalgeber aufweisen.

Figur 1 zeigt das Kraftstofftanksystem zu einem Zeitpunkt, zu dem der Gasraum 1 keine (Gas-)Verbindung zur Atmosphäre aufweist. Das Rezirkulationsleitungsventil 9 ist geschlossen G, so dass die Verbindung des Gasraums 1 zum Einfüllstutzen 4 unterbrochen ist.

Zu diesem Zeitpunkt beginnt das erfindungsgemäße Verfahren, das z.B. dadurch ausgelöst werden kann, dass durch die Vorrichtung 7 bestimmt wurde, dass der Kraftstofftank 2 befüllt oder vollständig befüllt wurde, eine geöffnete Tankklappe (nicht gezeigt) geschlossen wurde, oder der Motor zur Fortbewegung (nicht gezeigt) aktiviert (oder gestartet) wurde.

Im Gasraum 1 ist ein erster Druck, der größer als der Druck der Atmosphäre ist. Die Höhe Y1 des Flüssigkeitsspiegels im Tankeinfüllrohr 6 ist höher als die Höhe X1 des Flüssigkeitsspiegels im Kraftstofftank 2. Über dem Flüssigkeitsspiegel im Kraftstofftank ist der Gasraum 1. Zu diesem Zeitpunkt ist der Kraftstofftankverschluss nicht verschlossen, d.h. die Tankkappe ist nicht auf dem Einfüllstutzen angebracht.

Die Vorrichtung 7 zur Datenverarbeitung erhält zu dem in Figur 1 dargestellten Zeitpunkt von dem Drucksensor 5 Werte über die Höhe des Druckes im Gasraum 1, also die Werte über den ersten Druck.

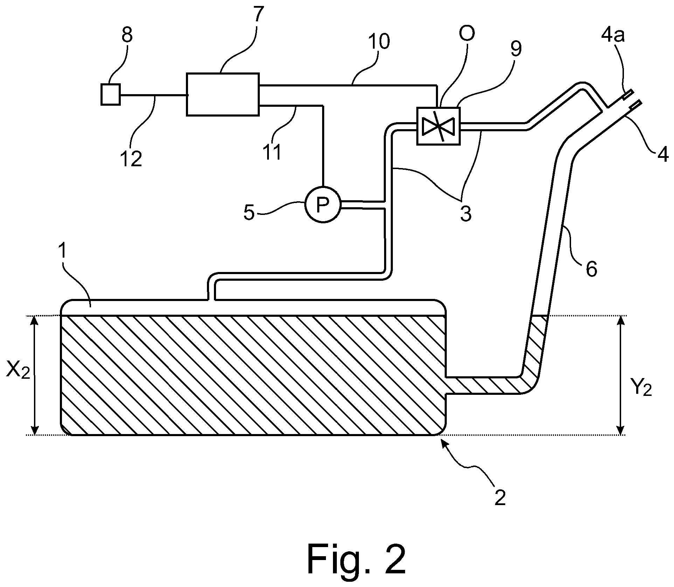

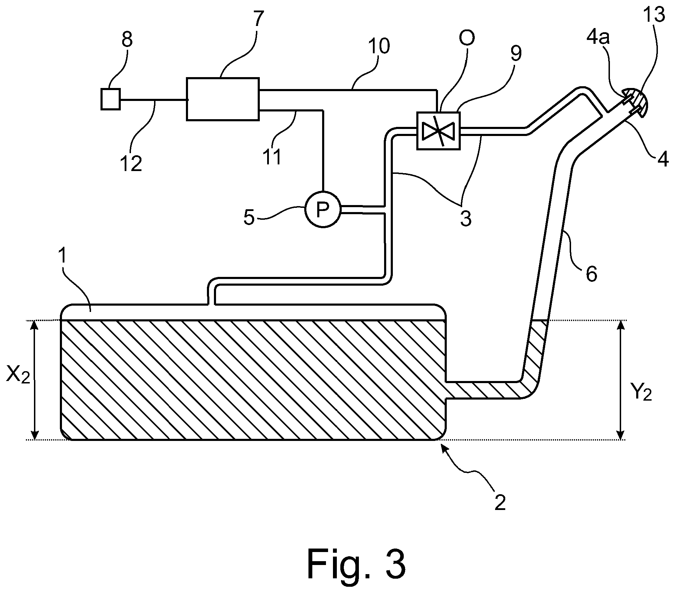

Die nachfolgend beschriebenen Figuren 2 und 3 illustrieren den weiteren Verlauf des Verfahrens für den Fall, dass das fluiddichte Anbringen der Tankkappe 13 erfolgt ist (Figur 3) oder nicht (Figur 2).

Figur 2 zeigt das Kraftstoffsystem in einem Zustand bei dem das fluiddichte Anbringen der Tankkappe 13 nicht erfolgt ist.

Insbesondere zeigt Figur 2 das Kraftstoffsystem, nachdem das Rezirkulationsleitungsventil 9 infolge eines Signals durch die Vorrichtung 7 über die Datenleitung 11 geöffnet O wurde. Der Gasraum 1 hat über die geöffnete Rezirkulationsleitung 3 eine gasförmige Verbindung zum Einfüllstutzen 4, und dieser hat Zugang zur Atmosphäre. Dies führt zu einem Abbau des Druckes im Gasraum 1 innerhalb eines kurzen Zeitraums. Ferner sind nun die Flüssigkeiten im Kraftstofftank 2 und die Flüssigkeiten im Tankeinfüllrohr mit dem gleichen oder zumindest annähernd gleichen Druck beaufschlagt. In der Folge gleichen sich die Höhe Y2 des Flüssigkeitsspiegels im Tankeinfüllrohr 6 und die Höhe X2 des Flüssigkeitsspiegels im Kraftstofftank 2 an bis sie gleiches oder fast gleiches Niveau erreicht haben.

Die Vorrichtung 7 zur Datenverarbeitung erhält zu dem in Figur 2 dargestellten Zeitpunkt von dem Drucksensor 5 Werte über die Höhe des Druckes im Gasraum 1, also die Werte über den zweiten Druck. Während in Figur 2 die Situation dargestellt ist, dass sich die Höhe Y2 des Flüssigkeitsspiegels im Tankeinfüllrohr 6 und die Höhe X2 des Flüssigkeitsspiegels im Kraftstofftank 2 weitgehend angeglichen haben, ist es auch möglich den Wert des zweiten _Drucks auch bereits zu einem Zeitpunkt zu bestimmen, zu dem die Flüssigkeitsspiegel gerade begonnen haben sich anzugleichen. Das Angleichen der Flüssigkeitsspiegel ereignet sich in Folge des Druckabfalls im Gasraum 1. Der Druckabfall im Gasraum 1 stellt sich rasch ein, während das Angleichen der Flüssigkeitsspiegel im Vergleich zum Druckabfall verzögert erfolgt.

Die Vorrichtung 7 kann aus diesen zwei ermittelten Werten für den ersten und zweiten Druck eine Differenz bestimmen. Falls diese Differenz einen vorgegebenen Schwellenwert überschreitet, bestimmt die Vorrichtung 7, dass der Kraftstofftankverschluss den Einfüllstutzen nicht verschließt. Daraufhin kann die Vorrichtung 7 über die Datenleitung 12 ein Signal an den Signalgeber 8 übermitteln. In Reaktion darauf gibt der Signalgeber 8 ein Ausgabesignal aus, z.B. ein optisches Signal wie eine aktivierte Kontrollleuchte (z.B. mit einem stilisierten Symbol), das den Nutzer darüber informiert, dass der Kraftstofftankverschluss den Einfüllstutzen nicht fluiddicht verschließt, bzw. dass die Tankkappe den Einfüllstutzen nicht fluiddicht verschließt.

Figur 3 zeigt das Kraftstoffsystem in einem Zustand bei dem das fluiddichte Anbringen der Tankkappe 13 im Gegensatz zu der in Figur 2 dargestellten Situation erfolgt ist.

Insbesondere zeigt Figur 3 das Kraftstoffsystem, nachdem das Rezirkulationsleitungsventil 9 infolge eines Signals durch die Vorrichtung 7 über die Datenleitung 11 geöffnet O wurde. Der Gasraum 1 hat über die geöffnete Rezirkulationsleitung 3 eine gasförmige Verbindung zum Einfüllstutzen 4, aber dieser hat wegen der angebrachten Tankkappe 13 keinen Zugang zur Atmosphäre. Dies führt zu einem wesentlich geringeren Abbau des Druckes im Gasraum 1 innerhalb eines vorbestimmten Zeitraums als dies in der in Figur 2 beschriebenen Situation der Fall wäre. Dies ist darauf zurückführen, dass das Gasvolumen im Einfüllstutzen nur relativ klein ist, während in der Situation, die in Figur 2 beschrieben ist, der Gasraum zumindest indirekt in Verbindung mit der Atmosphäre steht. Die Flüssigkeiten im Kraftstofftank 2 und die Flüssigkeiten im Tankeinfüllrohr sind nun mit dem gleichen oder zumindest annähernd gleichen Druck beaufschlagt. In der Folge gleichen sich die Höhe Y1 des Flüssigkeitsspiegels im Tankeinfüllrohr 6 und die Höhe X1 des Flüssigkeitsspiegels im Kraftstofftank 2 an bis sie gleiches oder fast gleiches Niveau erreicht haben.

Die Vorrichtung 7 zur Datenverarbeitung erhält zu dem in Figur 3 dargestellten Zeitpunkt von dem Drucksensor 5 Werte über die Höhe des Druckes im Gasraum 1, die Werte über den zweiten Druck.

Die Vorrichtung 7 kann aus diesen zwei ermittelten Werten für den ersten und zweiten Druck eine Differenz bestimmen. Die Vorrichtung 7 ist so eingerichtet, dass sie bestimmt, dass diese Differenz einen vorgegebenen Schwellenwert unterschreitet. Daraufhin bestimmt die Vorrichtung 7, dass der Kraftstofftankverschluss den Einfüllstutzen verschließt und kann optional einen Wert für den Verschlussstatus angeben, der anzeigt, dass der Kraftstofftankverschluss den Einfüllstutzen verschließt. Es kann darauf verzichtet werden dieses Ergebnis dem Nutzer mitzuteilen, oder es kann in einer ersten Alternative möglich sein, diese Information abzuspeichern, oder in einer zweiten Alternative kann die Vorrichtung 7 über die Datenleitung 12 ein Signal an den Signalgeber 8 übermitteln. In Reaktion darauf gibt der Signalgeber 8 ein Ausgabesignal aus, z.B. ein optisches Signal wie eine aktivierte Kontrollleuchte (z.B. mit einem stilisierten Symbol), das den Nutzer darüber informiert, dass der Kraftstofftankverschluss den Einfüllstutzen fluiddicht verschließt, bzw. dass die Tankkappe den Einfüllstutzen fluiddicht verschließt.

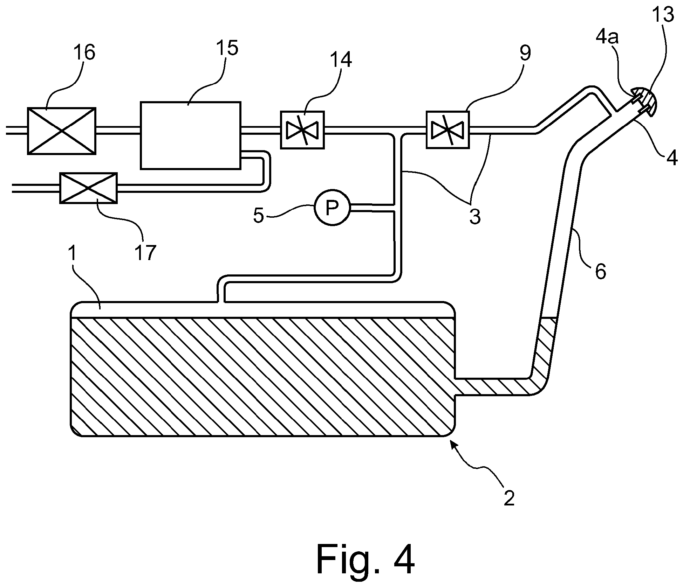

Figur 4 illustriert das Kraftstofftanksystem in der Form eines ORVR-Systems.

Der Kraftstofftank 2 weist ein Betankungsentlüftungsventil 14 auf, das über eine Leitung eine fluide Verbindung vom Gasraum 1 des Kraftstofftanks 2 zu einem Aktivkohlefilter 15 herstellt. Der Aktivkohlefilter 15 ist über eine weitere Leitung mit einem Entlüftungsventil 17 (purge valve) verbunden, das seinerseits mit einer abführenden Leitung verbunden ist. Der Aktivkohlefilter 15 ist über eine weitere Leitung mit einer Leckanzeigeeinrichtung 16 (leak detection unit) verbunden. Eine hier nicht gezeigte Alternative mit einem EVR System (External Vapor Recovery System) weist keine Leckanzeigeeinrichtung 16 auf. Im vorliegenden Fall teilen sich das Rezirkulationsventil 9 und Betankungsentlüftungsventil 14 ihre Zuleitung 3 bis auf einen Teilabschnitt kurz von den jeweiligen Ventilen 9 und 14, der gegabelt ist. Es ist aber auch möglich, dass Ventile 9 und 14 getrennte Zuleitungen besitzen.

### Bezugszeichen

- 1:: Gasraum
- 2:: Kraftstofftank
- 3:: Rezirkulationsleitung
- 4:: Einfüllstutzen
- 4a:: Teil der Kraftstofftankverschlussvorrichtung im Einfüllstutzen, die fest im Einfüllstutzen angebracht ist
- 5:: Drucksensor
- 6:: Tankeinfüllrohr
- 7:: Vorrichtung zur Datenverarbeitung
- 8:: Signalgeber
- 9:: (Rezirkulationsleitungs-)Ventil
- 10:: Datenleitung zwischen Ventil und Vorrichtung zur Datenverarbeitung
- 11:: Datenleitung zwischen Drucksensor und Vorrichtung zur Datenverarbeitung
- 12:: Datenleitung zwischen Vorrichtung zur Datenverarbeitung und Signalgeber
- 13:: Tankkappe (Tankdeckel); Teil der Kraftstofftankverschlussvorrichtung, die reversibel im Einfüllstutzen angebracht ist.
- 14:: Betankungsentlüftungsventil
- 15:: Aktivkohlefilter
- 16:: Leckanzeigeeinrichtung
- 17:: Entlüftungsventil
- G:: Ventil geschlossen
- O:: Ventil offen

## Patentansprüche

1. Von einer Vorrichtung zur Datenverarbeitung (7) durchgeführtes Verfahren zum Erfassen des Verschlussstatus eines Kraftstofftankverschlusses eines Kraftfahrzeugs umfassend die Schritte:
- Erhalten eines Wertes für einen ersten Druck, der in dem Gasraum (1) des Kraftstofftanks (2) des Kraftfahrzeugs vorliegt;
- Ausgabe eines Signals zum Öffnen einer Rezirkulationsleitung (3), die vom Kraftstofftank (2) in den Einfüllstutzen (4) des Kraftstofftanks (2) führt;
- Erhalten eines Wertes für einen zweiten Druck, der in dem Gasraum (1) des Kraftstofftanks (2) vorliegt;
- Falls der zweite Druck um einen vorbestimmten Wert geringer als der erste Druck ist, Bestimmen, dass der Kraftstofftankverschluss nicht verschlossen ist und Ausgeben eines Wertes für den Verschlussstatus, der anzeigt, dass der Kraftstofftankverschluss den Einfüllstutzen (4) nicht verschließt.

2. Verfahren gemäß einem der vorstehenden Ansprüche **dadurch gekennzeichnet, dass** vor den Schritten aus Anspruch 1 der folgende Schritt stattfindet: Übermitteln eines Signals zum Unterbrechen der Verbindung des Gasraums (1) zur Atmosphäre.

3. Verfahren gemäß Anspruch 2 **dadurch gekennzeichnet, dass** der Schritt aus Anspruch 2 umfasst: Übermitteln eines Signals zum Unterbrechen der Rezirkulationsleitung (3).

4. Verfahren gemäß einem der vorstehenden Ansprüche **dadurch gekennzeichnet, dass** das Verfahren gemäß Anspruch 1 durchgeführt wird nach dem Bestimmen,
i) dass der Kraftstofftank (2) befüllt wurde,
ii) dass ein Motor zur Fortbewegung des Fahrzeugs eingeschaltet wurde,
iii) die Tankklappe an dem Kraftstofftankverschluss geschlossen wurde, oder
iv) dass der Befüllvorgang von der Vorrichtung zur Datenverarbeitung als abgeschlossen definiert wurde;
oder zwei, drei oder vier der Bedingungen i) bis iv) vorliegen.

5. Verfahren gemäß Anspruch 4 **dadurch gekennzeichnet, dass** Schritt i) umfasst: Bestimmen, dass der Füllstand im Kraftstofftank (2) erhöht wurde und Bestimmen, dass der Füllstand im Kraftstofftank (2) nicht weiter ansteigt.

6. Verfahren gemäß Anspruch 5 **dadurch gekennzeichnet, dass** Schritt i) umfasst: Bestimmen, dass der Kraftstofftank (2) zu seiner vollen Kapazität gefüllt wurde.

7. Verfahren gemäß Anspruch 4 **dadurch gekennzeichnet, dass** Schritt i) umfasst: Bestimmen, dass der Flüssigkeitsspiegel des Kraftstoffs in einem Tankeinfüllrohr (6) des Kraftstofftanks (2) oberhalb des Flüssigkeitsspiegels in dem Kraftstofftank (2) liegt.

8. Verfahren gemäß einem der vorstehenden Ansprüche **dadurch gekennzeichnet, dass** der Wert des ersten Drucks mindestens 250 Pascal, mindestens 500 Pascal, mindestens 1000 Pascal oder mindestens 2000 Pascal größer als der Druck in der Atmosphäre am Kraftfahrzeug ist.

9. Verfahren gemäß einem der vorstehenden Ansprüche **dadurch gekennzeichnet, dass** der zweite Druck mindestens 10%, 15%, 20%, 30%, 40%, 50%, 60%, 70%, 80%, 90% oder 100% geringer ist als der erste Druck ist.

10. Verfahren gemäß einem der vorstehenden Ansprüche **dadurch gekennzeichnet, dass** das Ausgeben eines Wertes für den Verschlussstatus, der anzeigt, dass der Kraftstofftankverschluss den Einfüllstutzen (4) nicht verschließt, die Ausgabe eines Signals bewirkt, das ein visuelles, akustisches oder haptisches Signal im Fahrgastinnenraum ist.

11. Verfahren gemäß Anspruch 10 **dadurch gekennzeichnet, dass** das Signal ein visuelles Warnsignal im oder am Armaturenbrett des Fahrzeugs ist.

12. Verfahren zum Erfassen des Verschlussstatus eines Kraftstofftankverschlusses eines Kraftfahrzeugs umfassend das Verfahren gemäß einem der Ansprüche 1-11 und umfassend die Schritte:
- Bestimmen des ersten Drucks, der in dem Gasraum (1) des Kraftstofftanks (2) des Kraftfahrzeugs vorliegt;
- Öffnen der Rezirkulationsleitung (3);
- Bestimmen des zweiten Drucks, der in dem Gasraum (1) des Kraftstofftanks (2) vorliegt;
- Falls der der zweite Druck um den vorbestimmten Wert geringer als der erste Druck ist, Bestimmen, dass der Kraftstofftankverschluss nicht verschlossen ist.

13. Computerprogramm, umfassend Befehle, die bei der Ausführung des Programms durch einen Computer diesen veranlassen, das Verfahren gemäß einem der Ansprüche 1-11 auszuführen.

14. Computerlesbares Speichermedium, umfassend Befehle, die bei der Ausführung durch einen Computer diesen veranlassen, das Verfahren gemäß einem der Ansprüche 1-11 auszuführen.

15. Vorrichtung zur Datenverarbeitung (7), umfassend computerlesbares Speichermedium gemäß Anspruch 14.

16. System zum Erfassen des Verschlussstatus eines Kraftstofftankverschlusses eines Kraftfahrzeugs umfassend
einen Kraftstofftank (2) mit Tankeinfüllrohr (6) und Einfüllstützen;
ein Rezirkulationsleitung (3), die vom Kraftstofftank (2) in den Einfüllstutzen (4) des Kraftstofftanks (2) führt;
einen Sensor zur Erfassung des Druckes in dem Gasraum (1) des Kraftstofftanks (2);
einer Verschlussvorrichtung am Einfüllstutzen (4) zur Trennung des Kraftstofftanks (2) von der Atmosphäre; und
eine Vorrichtung zur Datenverarbeitung (7) gemäß Anspruch 15.

## Claims

1. Method carried out by a device for data processing (7) for detecting the closure status of a fuel tank closure of a motor vehicle, comprising the steps of:
- obtaining a value for a first pressure which is present in the gas chamber (1) of the fuel tank (2) of the motor vehicle;
- outputting a signal to open a recirculation line (3) leading from the fuel tank (2) into the filler neck (4) of the fuel tank (2);
- obtaining a value for a second pressure which is present in the gas chamber (1) of the fuel tank (2);
- if the second pressure is lower than the first pressure by a predetermined value, determining that the fuel tank closure is not closed and outputting a value for the closure status that indicates that the fuel tank closure does not close the filler neck (4).

2. Method according to one of the preceding claims, **characterized in that** the following step takes place before the steps of claim 1: transmitting a signal to interrupt the connection of the gas chamber (1) to the atmosphere.

3. Method according to claim 2, **characterized in that** the step of claim 2 comprises: transmitting a signal to interrupt the recirculation line (3).

4. Method according to any of the preceding claims, **characterized in that** the method according to claim 1 is carried out after determining
i) that the fuel tank (2) has been filled,
ii) that a motor has been switched on to propel the vehicle,
iii) the tank flap on the fuel tank closure has been closed, or
iv) that the filling process has been defined as completed by the device for data processing;
or two, three or four of the conditions i) to iv) are present.

5. Method according to claim 4, **characterized in that** step i) comprises: determining that the level in the fuel tank (2) has increased and determining that the level in the fuel tank (2) is no longer increasing.

6. Method according to claim 5, **characterized in that** step i) comprises: determining that the fuel tank (2) has been filled to its full capacity.

7. Method according to claim 4, **characterized in that** step i) comprises: determining that the liquid level of the fuel in a tank filler pipe (6) of the fuel tank (2) is above the liquid level in the fuel tank (2).

8. Method according to any of the preceding claims, **characterized in that** the value of the first pressure is at least 250 pascals, at least 500 pascals, at least 1000 pascals or at least 2000 pascals greater than the pressure in the atmosphere at the motor vehicle.

9. Method according to any of the preceding claims, **characterized in that** the second pressure is at least 10%, 15%, 20%, 30%, 40%, 50%, 60%, 70%, 80%, 90% or 100% lower than the first pressure.

10. Method according to any of the preceding claims, **characterized in that** outputting a value for the closure status that indicates that the fuel tank closure does not close the filler neck (4) causes the output of a signal which is a visual, acoustic or haptic signal in the passenger compartment.

11. Method according to claim 10, **characterized in that** the signal is a visual warning signal in or on the dashboard of the vehicle.

12. Method for detecting the closure status of a fuel tank closure of a motor vehicle comprising the method according to any of claims 1-11 and comprising the steps of:
- determining the first pressure present in the gas chamber (1) of the fuel tank (2) of the motor vehicle;
- opening the recirculation line (3);
- determining the second pressure present in the gas chamber (1) of the fuel tank (2);
- if the second pressure is lower than the first pressure by the predetermined value, determining that the fuel tank closure is not closed.

13. Computer program comprising instructions which, when the program is executed by a computer, cause said computer to carry out the method according to any of claims 1-11.

14. Computer-readable storage medium comprising instructions which, when executed by a computer, cause said computer to carry out the method according to any of claims 1-11.

15. Device for data processing (7), comprising computer-readable storage medium according to claim 14.

16. System for detecting the closure status of a fuel tank closure of a motor vehicle, comprising
a fuel tank (2) with a tank filler pipe (6) and a filler neck;
a recirculation line (3) leading from the fuel tank (2) into the filler neck (4) of the fuel tank (2);
a sensor for detecting the pressure in the gas chamber (1) of the fuel tank (2);
a closure device on the filler neck (4) for separating the fuel tank (2) from the atmosphere; and
a device for data processing (7) according to claim 15.

## Revendications

1. Procédé mis en œuvre par un dispositif pour le traitement de données (7) destiné à détecter l'état de fermeture d'un bouchon de réservoir à carburant d'un véhicule automobile, comprenant les étapes consistant à :
- obtenir une valeur pour une première pression présente dans l'espace gazeux (1) du réservoir à carburant (2) du véhicule automobile ;
- émettre un signal destiné à ouvrir une conduite de recirculation (3) qui mène du réservoir à carburant (2) à la tubulure de remplissage (4) du réservoir à carburant (2) ;
- obtenir une valeur pour une seconde pression présente dans l'espace gazeux (1) du réservoir à carburant (2) ;
- si la seconde pression est inférieure à la première pression d'une valeur prédéterminée, déterminer que le bouchon de réservoir à carburant n'est pas fermé et émettre une valeur pour l'état de fermeture indiquant que le bouchon de réservoir à carburant ne ferme pas la tubulure de remplissage (4).

2. Procédé selon l'une des revendications précédentes,
**caractérisé en ce que**, avant les étapes de la revendication 1, l'étape suivante a lieu : transmission d'un signal destiné à interrompre la communication de l'espace gazeux (1) avec l'atmosphère.

3. Procédé selon la revendication 2**, caractérisé en ce que** l'étape de la revendication 2 comprend : la transmission d'un signal destiné à interrompre la conduite de recirculation (3).

4. Procédé selon l'une des revendications précédentes,
**caractérisé en ce que** le procédé selon la revendication 1 est mis en œuvre après la détermination selon laquelle
i) le réservoir à carburant (2) a été rempli,
ii) un moteur pour faire avancer le véhicule a été mis en marche,
iii) la trappe du réservoir au niveau du bouchon de réservoir à carburant a été fermée, ou
iv) l'opération de remplissage a été définie comme étant terminée par le dispositif pour le traitement de données ;
ou deux, trois ou quatre des conditions i) à iv) sont remplies.

5. Procédé selon la revendication 4, **caractérisé en ce que** l'étape i) comprend : le fait de déterminer que le niveau de remplissage dans le réservoir à carburant (2) a augmenté et le fait de déterminer que le niveau de remplissage dans le réservoir à carburant (2) n'augmente plus.

6. Procédé selon la revendication 5, **caractérisé en ce que** l'étape i) comprend : le fait de déterminer que le réservoir à carburant (2) a été rempli à sa pleine capacité.

7. Procédé selon la revendication 4, **caractérisé en ce que** l'étape i) comprend : le fait de déterminer que le niveau de liquide du carburant dans un tube de remplissage de réservoir (6) du réservoir à carburant (2) est supérieur au niveau de liquide dans le réservoir à carburant (2).

8. Procédé selon l'une des revendications précédentes**,**
**caractérisé en ce que** la valeur de la première pression est supérieure d'au moins 250 pascals, d'au moins 500 pascals, d'au moins 1000 pascals ou d'au moins 2000 pascals à la pression dans l'atmosphère au niveau du véhicule automobile.

9. Procédé selon l'une des revendications précédentes**,**
**caractérisé en ce que** la seconde pression est inférieure d'au moins 10 %, 15 %, 20 %, 30 %, 40 %, 50 %, 60 %, 70 %, 80 %, 90 % ou 100 % à la première pression.

10. Procédé selon l'une des revendications précédente**s, caractérisé en ce que** l'émission d'une valeur pour l'état de fermeture indiquant que le bouchon de réservoir à carburant ne ferme pas la tubulure de remplissage (4) provoque l'émission d'un signal qui est un signal visuel, sonore ou haptique dans l'habitacle du véhicule.

11. Procédé selon la revendication 10, **caractérisé en ce que** le signal est un signal d'avertissement visuel dans ou sur le tableau de bord du véhicule.

12. Procédé pour la détection de l'état de fermeture d'un bouchon de réservoir à carburant d'un véhicule automobile comprenant le procédé selon l'une des revendications 1 à 11 et comprenant les étapes consistant à :
- déterminer la première pression présente dans l'espace gazeux (1) du réservoir à carburant (2) du véhicule automobile ;
- ouvrir la conduite de recirculation (3) ;
- déterminer la seconde pression présente dans l'espace gazeux (1) du réservoir à carburant (2) ;
- si la seconde pression est inférieure à la première pression de la valeur prédéterminée, déterminer que le bouchon de réservoir à carburant n'est pas fermé.

13. Programme informatique comprenant des instructions qui, lorsque le programme est exécuté par un ordinateur, amènent celui-ci à exécuter le procédé selon l'une des revendications 1 à 11.

14. Support de stockage lisible par ordinateur comprenant des instructions qui, lorsqu'elles sont exécutées par un ordinateur, amènent celui-ci à exécuter le procédé selon l'une des revendications 1 à 11.

15. Dispositif pour le traitement de données (7) comprenant un support de stockage lisible par ordinateur selon la revendication 14.

16. Système pour la détection de l'état de fermeture d'un bouchon de réservoir à carburant d'un véhicule automobile comprenant
un réservoir à carburant (2) comportant un tube de remplissage de réservoir (6) et une tubulure de remplissage ;
une conduite de recirculation (3) qui mène du réservoir à carburant (2) à la tubulure de remplissage (4) du réservoir à carburant (2) ;
un capteur destiné à détecter la pression dans l'espace gazeux (1) du réservoir à carburant (2) ;
un dispositif de fermeture sur la tubulure de remplissage (4) destiné à séparer le réservoir à carburant (2) de l'atmosphère ; et
un dispositif pour le traitement de données (7) selon la revendication 15.
